# EUROPÄISCHE PATENTSCHRIFT

(11) **EP 0 398 173 B1**
(45) Veröffentlichungstag und Bekanntmachung des Hinweises auf die Patenterteilung: **24.01.1996**
(21) Anmeldenummer: 90108885.6
(22) Anmeldetag: 11.05.1990
(51) Int. Cl.: B01D 33/067, B04B 7/16, B01D 29/05, B01D 33/06

(54) **Filtrationseinrichtung mit einer Vorrichtung zum Halten von Filterelementen**
Filter apparatus with an apparatus for fixing filter elements
Filtre avec un dispositif de fixation d'éléments de filtre

(30) Priorität: 19.05.1989 DE 3916383
(43) Veröffentlichungstag der Anmeldung: 22.11.1990
(73) Patentinhaber: Krauss-Maffei Aktiengesellschaft, D-80997 München (DE)
(72) Erfinder: Krettek, Guntram, D-4060 Viersen 12 (DE)

(56) Entgegenhaltungen:
- DE-B- 1 077 609
- DE-B- 1 933 625
- GB-A- 2 093 719
- US-A- 1 581 089
- US-A- 1 946 500

## Beschreibung

Die Erfindung betrifft eine Filtrationseinrichtung mit einer Vorrichtung zum Halten von Filterelementen, insbesondere von Filterfolien oder Filtertüchern in Filtrationseinrichtungen nach dem Oberbegriff des Anspruchs 1. Eine solche Einrichtung ist aus GB-A-2 093 719 bekannt.

Filtrationseinrichtungen zum Abscheiden von mikrofeinen Feststoffanteilen aus Suspensionen werden in vielfältiger Form ausgebildet, insbesondere als Zentrifugen. Zum Abtrennen der mikrofeinen Feststoffanteile - wie sie typischerweise in Suspensionen bei chemischen Prozessen anfallen - sind Filterelemente mit entsprechendem Rückhaltevermögen erforderlich. Es werden in vielen Fällen hierzu auswechselbare Filterfolien oder Filtertücher verwendet. Diese Filtertücher sind normalerweise auf Stützflächen mit entsprechend vielen, feinen Dränagekanälen oder auf Stützsieben aufgelegt. Derartige Stützflächen sind aus US-A-1 946 500 bekannt.

Um das Austreten von gefilterter Flüssigkeit zu verhindern, müssen die Ränder der Filterelemente befestigt und abgedichtet werden.

DE-B-1 933 625 liefert Beispiele für solche Abdichtungen für Bandfilter. Diese Lösungen sind jedoch auf Filter für Zentrifugen nicht übertragbar.

Nicht ganz einfach ist eine sichere Befestigung des Filtertuches in der Filtrationseinrichtung. Hierzu sind Spannrahmen, Spannringe mit Schrauben oder Nuten, in denen das Filtertuch gehalten wird, üblich. Diese Befestigungsarten sind bei statischen Filtrationseinrichtungen schon mit Nachteilen behaftet: Sie stellen zusätliche Bauteile dar, deren Befestigung und Lösen bei Montage und beim Auswechseln einen erheblichen Zeitaufwand erfordern. Hinzu kommt, daß das Filtertuch möglichst faltenfrei auf dem Stützsieb aufliegen muß. Besondere Schwierigkeiten bedeutet ein eventuell notwendiges Rückspülen zum Reinigen des Filtertuches.

Bei Zentrifugen, bei denen die Filterfolie oder das Filtertuch in der Trommel auf dem Stützsieb aufliegt, sind die Filtertuchbefestigungen herstellungsmäßig schwierig und teuer.

So ist aus GB-A-20 93 719 eine Befestigungsvorrichtung bekannt, bei der das Filterelement mittels Spannringen in Nuten im Boden bzw. Deckel eines Filtergefäßes verankert ist. Die Herstellung ist drehtechnisch schwierig. Außerdem müssen Boden und Deckel verstärkt werden, wodurch sich ein zusätzlicher Materialbedarf ergibt. Die durch die Nut bedingte Kerbwirkung und ein schwieriger Filtertuchwechsel sind weitere Nachteile der bekannten Ausführungen.

Die Befestigung des Filtertuches mittels Spannring und Spannschraube erbringt einen zusätzlichen Materialbedarf, weil der Trommelmantel bearbeitet werden muß und zusätzliche Teile erforderlich sind. Ein Teil des Restprodukts der zurückgehaltenen Feststoffe bleibt auf dem Spannring liegen.

Die Filtertuchbefestigung mittels Spannring und Schraubbefestigung ist ebenfalls nachteilig. Auch hier ergibt sich ein zusätzlicher Materialbedarf, weil die Trommelwandung bearbeitet werden muß. Zusätzliche Teile und zusätzliche Bohrungen im Trommelkörper sind weitere Nachteile. Bei Rückspültrommeln wird die Filtertuchbefestigung problematisch, weil sich die Bohrungen schlecht abdichten lassen.

Die gleichen zuvor geschilderten Nachteile ergeben sich bei einer Filtertuchbefestigung mittels Schwalbenschwanznut in der Trommelwandung.

Bei Rückspülzentrifugen mit Schwalbenschwanznuten im Trommeloberteil und im Trommelboden sind zusätzliche Klemmleisten erforderlich, damit sich das Filtertuch beim Rückspülen nicht abhebt und dabei beschädigt wird. Ansonsten ergeben sich hier die gleichen Nachteile wie bei den zuvor beschriebenen bekannten Filtern.

Der Erfindung liegt die Aufgabe zugrunde, eine einfache und schnelle Befestigung des Filterelements zu schaffen, die gleichzeitig ein nahezu vollständiges Abtragen oder Abschälen der Feststoffschicht aus den Filtrationseinrichtungen ohne Beschädigung des Filterelements ermöglicht.

Diese Aufgabe wird gelöst durch die Merkmale des Anspruchs 1.

Durch das Schutzsieb wird eine Beschädigung der Filterfolie oder des Filtertuchs beim Abtragen oder Ausräumen der Feststoffschicht sicher vermieden. Es ist nun auch möglich, diese Schicht nahezu vollständig abzutragen, da der Schaber bis auf das Schutzsieb herangefahren werden kann. Auch bei statischen Filtrationseinrichtungen ist ein vollständiger Abtrag durch direkte Berührung von Schaber und Schutzsieb möglich. Weitere Vorteile der erfindungsgemäßen Vorrichtung sind der einfache und zeitsparende Ein- und Ausbau von Stützsieb und Filtertuch sowie die gute Abdichtung.

Im einfachsten Fall weist das Dichtelement zwei Dichtlippen auf, die eine Kammer bilden, in der der Rand sowohl des Filterelements, z.B. des Filtertuchs, als auch der Rand des Stützsiebes verläuft.

Es kann jedoch vorteilhaft sein, die Ränder von Stützsieb und Filtertuch in separaten Kammern verlaufen zu lassen. Dazu ist das Dichtelement mit einer zwischen den äußeren Dichtlippen angeordneten dritten Dichtlippe versehen, so daß zwischen dieser mittleren Dichtlippe und den äußeren Dichtlippen jeweils eine Kammer gebildet wird.

Das Stützsieb bildet gewissermaßen Dränagekanäle, um ein Abfließen der Filtratflüssigkeit zu den Ablauföffnungen in der darunterliegenden Stützplatte oder im Trommelmantel der Zentrifuge zu gewährleisten. Die "Dränagekanäle" machen einen etwas stärkeren Querschnitt des Stützsiebes erforderlich. Damit ein sicheres Einspannen des Stützsiebes zwischen den Dichtlippen gewährleistet wird, und um Beschädigungen des Filtertuches im Falle des gemeinsamen Einspannens mit dem Stützsieb zu vermeiden, ist es vorteilhaft, die Ränder des Stützsiebes an den Stellen, an denen sie in der Kammer des Dichtelementes verlaufen, flachzudrücken.

Es ist vorgesehen, zumindest die Dichtlippen, vorteilhafterweise jedoch den gesamten Dichtring, aus Gummi oder einem elastischen Kunststoff herzustellen. Wesentlich dabei ist, daß die Elastizität so bemessen ist, daß das Schutzsieb das Filtertuch dicht anliegend auf das Stützsieb andrückt.

Es ist von besonderem Vorteil, das Schutzsieb im Falle statischer Filtrationseinrichtungen mit einer leichten Wölbung in Durchströmrichtung auszuführen und es mittels geeigneter Befestigungselemente mit Vorspannung einzubauen. Mit dieser Maßnahme wird nicht nur ein sicheres Halten von Stützsieb und Filtertuch erreicht, sondern auch ein einwandfreies Fixieren des Filtertuches auf dem Stützsieb, da das Schutzsieb auf der gesamten Filtertuchfläche aufliegt. Dies ist besonders wichtig für das Rückspülen der Filtrationseinrichtung.

Die Erfindung bezieht sich insbesondere auf das Halten von Filterfolien oder Filtertüchern in Zentrifugen. Hierbei ist die erfindungsgemäße Vorrichtung noch vorteilhafter und wesentlich bedeutungsvoller als bei statischen Filtrationseinrichtungen, wie sich aus der Vielfalt der eingangs diskutierten Lösungsversuche ablesen läßt. Hier wird das Schutzsieb ebenso wie das Stützsieb zylinderförmig vorgebogen. Das Stützsieb und das Filtertuch werden jeweils mit ihren axialen Rändern in eine gemeinsame oder in je eine separate Kammer des in diesem Fall ringförmigen Dichtelementes eingeführt und in die Trommel so eingelegt, daß die Dichtelemente an Trommeldeckel und Trommelboden anliegen. Das Schutzsieb weist zur Erzeugung der für eine vollständige Auflage auf dem Filtertuch ausreichende Vorspannung einen an sich bekannten Steckverschluß auf. Für diesen Steckverschluß sind die radialen Ränder des Schutzsiebes mit Schlitzen bzw. Einschnitten versehen, die ineinandergeschoben werden und damit das Schutzsieb unter Spannung setzen. Diese Spannung drückt bereits im Stillstand das Schutzsieb auf die Dichtringe, bringt diese zur Anlage auf der Innenfläche des Trommelmantels und hält die Ränder von Stützsieb und Filtertuch zwischen den Dichtlippen sicher fest. Das Andrücken wird im Betriebszustand durch die Fliehkraft verstärkt. Zum anderen wird das Filtertuch auf der gesamten Fläche einwandfrei auf dem Stützsieb fixiert und letzteres unter dieser Vorspannung an den Trommelmantel gepreßt. Dies ist besonders wichtig bei Rückspülzentrifugen.

Gerade im Falle der Filterzentrifugen ist es wichtig, daß die zurückgehaltenen Feststoffe möglichst restlos aus der Trommel entfernt werden können. Das die Dichtelemente und das Filtertuch überdeckende Schutzsieb schafft eine geometrisch einwandfreie Innenfläche, so daß der Schaber des Ausräumers bis an das, mindestens jedoch sehr dicht an das, Schutzsieb herangefahren werden kann. Dies ermöglicht eine nahezu restlose Entleerung der zurückgehaltenen Feststoffe, und zwar bis in die Trommelecken hinein. Ein weiterer Vorteil der Erfindung ist darin zu sehen, daß die elastischen Dichtelemente ein einfaches und schnelles Wechseln des Filtertuches und der Siebe ermöglichen.

Es ist besonders vorteilhaft, die am Trommelmantel anliegende Dichtlippe des Dichtringes dicker und kürzer auszuführen als die zweite oder die beiden anderen Dichtlippen. Mit der größeren Dicke dieser "innenliegenden" Dichtlippe wird der Geometrie des Stützsiebes Rechnung getragen. Sie ist aber auch kürzer ausgeführt, um den Ringkanal der Trommel bei Rückspülzentrifugen nicht abzudecken. Die Dichtlippen werden insgesamt gerade nur so dick ausgeführt, wie es zum sicheren Halten von Stützsieb und Filtertuch unter allen Betriebsbedingungen erforderlich ist.

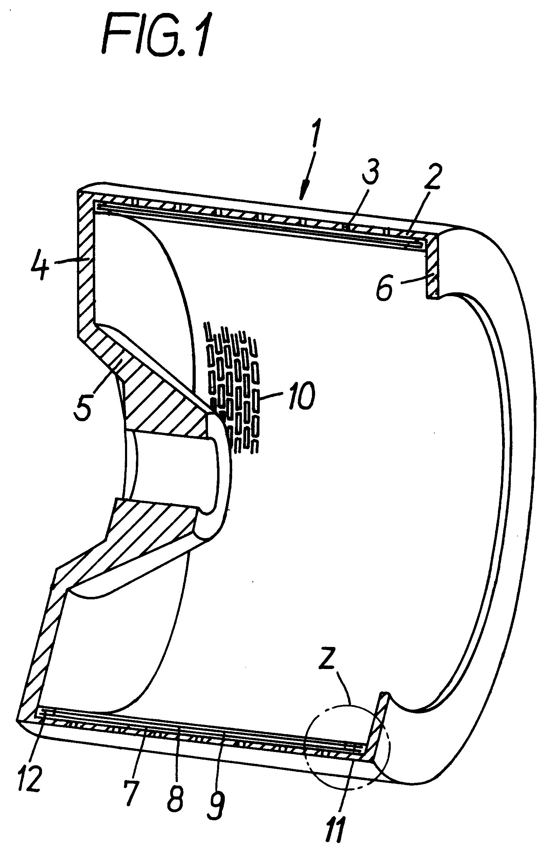

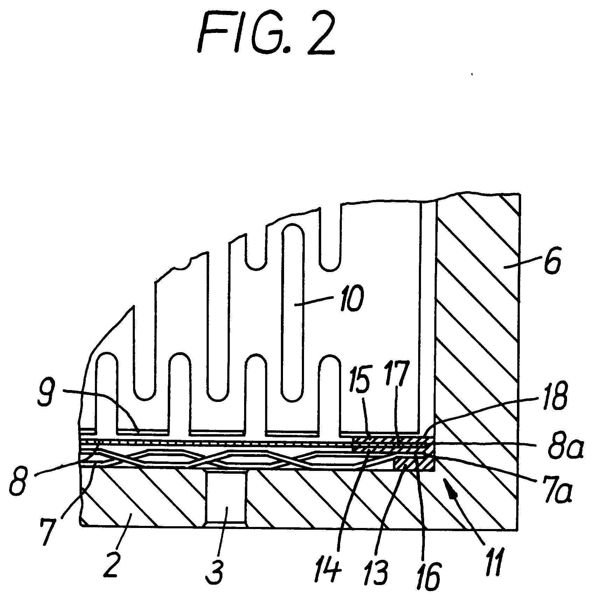

Ein Ausführungsbeispiel der Erfindung ist in den Fig. 1 und 2 dargestellt und nachfolgend näher beschrieben. Es zeigen:
Fig. 1 eine geschnittene Zentrifugentrommel in räumlicher Darstellung
Fig. 2 Einzelheit an der Stelle "Z" in Fig. 1 in vergrößertem Maßstab.

Die Zentrifugentrommel 1, bestehend aus einem Trommelmantel 2 mit Ablauföffnungen 3, einem Boden 4 mit Nabe 5 und einem Deckel 6, ist mit einem Stützsieb 7, einem Filtertuch 8 und einem Schutzsieb 9 versehen. Das Stützsieb 7 liegt auf der Innenseite des Trommelmantels 2 auf, darauf liegt das Filtertuch 8 dicht anliegend auf. Das Schutzsieb 9 mit den Durchlaßöffnungen 10 wird durch die Vorspannung fest auf das Filtertuch 8 gedrückt, so daß dieses fest auf dem Stützsieb 7 aufliegt. In Fig. 2 sind die Teile 7 bis 9 zum besseren Verständnis in unverspanntem Zustand dargestellt. Im Betriebszustand liegen alle Teile dicht aufeinander. Das Stützsieb 7 und das Filtertuch 8 werden in zwei ringförmigen Dichtelementen 11 und 12 gehalten, die im Bereich des Bodens 4 und des Deckels 6 angeordnet sind. Die ringförmigen Dichtelemente 11 und 12 weisen im Ausführungsbeispiel drei Dichtlippen 13, 14 und 15 auf, die zwei Kammern 16 und 17 bilden. In Kammer 16 verläuft der flachgepreßte tangentiale Rand 7a des Stützsiebes 7 und in Kammer 17 der tangentiale Rand 8a des Filtertuches 8. Nach Einbau des Stützsiebes 7 und des Filtertuches 8 zusammen mit den Dichtelementen 11 und 12 wird das Schutzsieb 9 so eingelegt, daß es auf die inneren Flächen 18 der Dichtelemente 11 und 12 drückt und auf dem Filtertuch 8 unter Spannung aufliegt.

## Patentansprüche

1. Filtrationseinrichtung mit einem Filterelement und einem das Filterelement berührenden Schutzsieb und mit einer Vorrichtung zum Halten des Filterelements, insbesondere einer Filterfolie oder eines Filtertuchs,
**dadurch gekennzeichnet, daß** die Ränder (7a und 8a) eines Stützsiebes (7) und des Filterelementes (8) zumindest teilweise zwischen Dichtlippen von elastischen Dichtelementen (11 und 12) verlaufen, daß das Filterelement (8) von dem unter Vorspannung stehenden Schutzsieb (9) gegen das Stützsieb (7) gepreßt wird, daß das Schutzsieb (9) die Dichtelemente (11 und 12) überdeckt und das Filterelement (8) und das Stützsieb (7) zwischen den Dichtlippen (13, 14 und 15) der Dichtelemente (11, 12) festklemmt.

2. Einrichtung nach Anspruch 1,
dadurch gekennzeichnet, daß
die Ränder (7a und 8a) des Stützsiebes (7) und des Filterelements (8) in einer gemeinsamen Kammer des Dichtelements verlaufen, die von zwei Dichtlippen gebildet wird.

3. Einrichtung nach Anspruch 1,
dadurch gekennzeichnet, daß
die Ränder (7a und 8a) des Stützsiebes (7) und des Filterelements (8) in zwei getrennten Kammern (16 und 17) des Dichtelementes (11) verlaufen, die von drei Dichtlippen (13, 14 und 15) gebildet werden.

4. Einrichtung nach einem der Ansprüche 1 bis 3,
dadurch gekennzeichnet, daß
das Stützsieb (7) einen flachgepreßten Rand (7a) aufweist.

5. Einrichtung nach einem der Ansprüche 1 bis 4,
dadurch gekennzeichnet, daß
das bzw. die Dichtelemente (11 und 12) aus Gummi oder elastischem Kunststoff bestehen.

6. Einrichtung nach einem der Ansprüche 1 bis 5,
dadurch gekennzeichnet, daß
das Schutzsieb (9) zur Verwendung in einer Zentrifuge zylinderförmig vorgebogen ist, mit den axialen Rändern auf Dichtelementen (11 bzw. 12) aufliegt und mittels eines Steckverschlusses an den radialen Rändern zum Halten und Andrücken der Filterfolie bzw. des Filtertuches (8) unter Vorspannung eingebaut ist.

7. Einrichtung nach Anspruch 6,
dadurch gekennzeichnet, daß
die an einem Trommelmantel (2) der Filtrationseinrichtung anliegende Dichtlippe (13) der Dichtringe (11 und 12) dicker und kürzer ausgeführt ist als die zweite Dichtlippe (14) bzw. die beiden anderen Dichtlippen (14 und 15).

## Claims

1. A filter apparatus having a filter element and a protective screen touching the filter element, and having a device for holding the filter element, more particularly a filter film or filter cloth, characterised in that the edges (7a and 8a) of a support screen (7) and of the filter element (8) extend at least partially between sealing lips of elastic sealing elements (11 and 12), in that the filter element (8) is pressed against the support screen (7) by the prestressed protective screen (9), in that the protective screen (9) covers the sealing elements (11 and 12) and clamps the filter element (8) and the support screen (7) between the sealing lips (13, 14 and 15) of the sealing elements (11, 12).

2. Apparatus according to claim 1, characterised in that the edges (7a and 8a) of the support screen (7) and of the filter element (8) extend in a common chamber of the sealing element formed by two sealing lips.

3. Apparatus according to claim 1, characterised in that the edges (7a and 8a) of the support screen (7) and of the filter element (8) extend in two separate chambers (16 and 17) of the sealing element (11) formed by three sealing lips (13, 14 and 15).

4. Apparatus according to any one of claims 1 to 3, characterised in that the support screen (7) has a pressed-flat edge (7a).

5. Apparatus according to any one of claims 1 to 4, characterised in that the sealing element or elements (11 and 12) consist of rubber or elastic plastic.

6. Apparatus according to any one of claims 1 to 5, characterised in that the protective screen (9) is cylindrically pre-bent for use in a centrifuge, bears by the axial edges on sealing elements (11, 12) and is fitted prestressed by means of a push-in fastener at the radial edges for holding and biasing the filter film or filter cloth (8).

7. Apparatus according to claim 6, characterised in that the sealing lip (13) of the sealing rings (11 and 12) bearing against a drum surface (2) of the filter apparatus is made thicker and shorter than the second sealing lip (14) or the other two sealing lips (14 and 15).

## Revendications

1. Appareil de filtration comportant un élément filtrant et un tamis de protection en contact avec l'élément filtrant ainsi qu'un dispositif de retenue de l'élément filtrant, notamment d'une feuille filtrante ou d'un tissu filtrant, caractérisé en ce que les bords (7a et 8a) d'un tamis d'appui (7) et de l'élément filtrant (8) passent au moins partiellement entre les lèvres d'étanchéité d'éléments d'étanchéité élastiques (11 et 12), que l'élément filtrant (8) est pressé par le tamis de protection (9) se trouvant sous tension contre le tamis d'appui (7), que le tamis de protection (9) recouvre les éléments d'étanchéité (11 et 12) et que l'élément filtrant (8) et le tamis d'appui (7) sont serrés entre les lèvres d'étanchéité (13, 14 et 15) des éléments d'étanchéité (11, 12).

2. Appareil selon la revendication 1, caractérisé en ce que les bords (7a et 8a) du tamis d'appui (7) et de l'élément filtrant (8) passent dans une chambre commune de l'élément d'étanchéité, formée par deux lèvres d'étanchéité.

3. Appareil selon la revendication 1, caractérisé en ce que les bords (7a et 8a) du tamis d'appui (7) et de l'élément filtrant (8) passent dans deux chambres distinctes (16 et 17) de l'élément d'étanchéité (11), formées par trois lèvres d'étanchéité (13, 14 et 15).

4. Appareil selon l'une des revendications 1 à 3, caractérisé en ce que le tamis d'appui (7) présente un bord aplati (7a).

5. Appareil selon l'une des revendications 1 à 4, caractérisé en ce que le ou les éléments d'étanchéité (11 et 12) sont en caoutchouc ou en matière synthétique élastique.

6. Appareil selon l'une des revendications 1 à 5, caractérisé en ce que le tamis de protection (9) pour utilisation dans une centrifugeuse est précintré en cylindre, repose par ses bords axiaux sur des éléments d'étanchéité (11 et 12) et est monté sous prétension au moyen d'un verrouillage enfichable sur les bords radiaux pour la retenue et la pression de la feuille filtrante ou du tissu filtrant (8).

7. Dispositif selon la revendication 6, caractérisé en ce que la lèvre d'étanchéité (13) des éléments d'étanchéité (11 et 12) reposant contre une chemise de tambour de l'appareil de filtration est plus épaisse et plus courte que la deuxième lèvre d'étanchéité (14) ou que les deux autres lèvres d'étanchéité (14 et 15).
